# EUROPEAN PATENT SPECIFICATION

(11) **EP 1 056 663 B1**
(45) Date of publication and mention of the grant of the patent: **06.11.2002**
(21) Application number: 99902934.1
(22) Date of filing: 03.02.1999
(51) Int. Cl.: B65G 67/20, B65G 1/06, B65G 25/02

(54) **CONVEYING SYSTEM**
FÖRDERSYSTEM
SYSTEME DE TRANSPORT

(30) Priority: 03.02.1998 NL 1008184
(43) Date of publication of application: 06.12.2000
(73) Proprietor: van Leeuwen, Cornelis Johannes Leonardus, 2352 RH Leiderdorp (NL)
(72) Inventor: van Leeuwen, Cornelis Johannes Leonardus, 2352 RH Leiderdorp (NL)
(74) Representative: Jorritsma, Ruurd
(86) International application number: NL9900055
(87) International publication number: WO99040002

(56) References cited:
- DE-A- 3 111 291
- DE-A- 19 622 792
- FR-A- 1 570 200
- FR-A- 2 219 094

## Description

The invention relates to a conveying device comprising two parallel conveyor tracks supporting member with a stationary support surface for bearing an object and a lifting slide which is displaceable along the conveyor track, which lifting slides having a lifting surface are displaceable between a release position situated beneath the support surface and a lift position situated above the support surface, as well as a first drive mechanism for displacement of the lifting slides along their respective conveyor track and a second drive mechanism for displacement of the lifting surface between the release position and the lift position.

A conveying device of this type can be obtained, for example, from the company Rolamat Ltd., Hampshire, UK, under the designation "Rolaload". This known conveying device for loading and unloading lorries comprises two parallel rails in which the lifting slides are mounted such that they are movable in the longitudinal direction. Situated between the rails is a rotary slat conveyor. At the ends of the rails there is a coupling device to which the rear of a semitrailer can be coupled and aligned relative to the rails. In the loading process, the load is brought by the slat conveyors to the ends of the rails, after which the lifting slides are brought into a lift position so that the load is lifted free from the slat conveyors. The lifting slides are next slid over the rails and brought into the loading space, so that the advanced load is transferred into a semitrailer, for example. In the loading space, the lifting slides run through aluminium chutes and, upon reaching the rear wall of the loading space, are withdrawn in these chutes to beneath the floor of the loading space to their release position. The load is thereby supported on the floor of the loading space and the lifting slides are able to be withdrawn from the loading space.

The known device has the drawback of being relatively complex through the use of two different conveying systems in the form of the traversable lifting slides and the rotary slat conveyor. With the known device, furthermore, it is not possible to position the goods of the load one to another on the conveying device and to group them. In addition, the known device is not suitable for conveying a stream of goods which is advanced transversely to the conveying device.

From FR-A-2,219,094 a conveying device according to the preamble of claim 1 is known. The known device comprises a number of parallel lifting slides which can be displaced along stationary support surfaces. Via inflatable elements a movable cap can be lifted above the stationary support surfaces to lift and displace a load. The cap can be lowered to support the load on the support surfaces. The known system has as a disadvantage that it is not possible to position the goods of a load relative to one another and that the known device is unsuitable for transferring the goods to a second conveyor which is advanced transversely to the conveying device.

An object of the present invention is to provide a conveying device in which these drawbacks are eliminated. To this end, the conveying device according to the present invention is characterized in that each lifting slide comprises at least a first and a second segment, the first and second segments each being provided with separate and independently operable second drive mechanisms.

The device according to the invention comprises a lifting slide which is constructed as a downwardly open U-shaped profile having two side walls and, suspended between them, a running wheel, a cap embracing the U-shaped profile, and a flexible fluid line, lying between the cap and the profile, for the expansion-induced mutual displacement of the cap and the profile.

In this way, a simple and robust lifting slide is formed. By virtue of a relatively large diameter of the running wheel, such as, for example, at least 70 mm, the displacement thereof is relatively insensitive to dirt and small particles on the running surface. By using the flexible fluid line, such as, for example, a 2-inch fire hose, a powerful lifting motion of the cap relative to the running wheel can be realized. Furthermore, the cap and the profile are preferably each provided with a stop for a force-limited lifting stroke of the cap of 25 mm, for example, relative to the U-shaped profile. The stop of the U-shaped profile can be bevelled, so that the stop of the cap, by being tilted, can be manually displaced along the stop of the U-shaped profile. The simple detachability of the cap by a simple manual tilting along one side makes the maintenance of the parts between the cap and the profile very simple. The U-shaped profile is further provided with a space for receiving/accommodating electric leads and/or of a fluid supply line connected to the fluid line. The electric leads can be connected, for example, to a pressure sensor located at the end of the lifting slides to determine when the continuous motion of the lifting slides has been blocked, for example by them having reached the end of the loading space.

The U-shaped profile can further be provided on a side wall with a slot lying parallel to the side wall, the profile being fastened, close to the top part of the slot, to a chain running through the slot, and the device comprising a chain wheel engaging on the chain and reaching into the slot. Furthermore, guide members reaching into the slot can be fitted along the conveyor tracks to ensure an accurate horizontal position of the lifting slides. The guide members can be formed, for example, from right-angled profiles, one arm of which forms a running surface for running wheels of the lifting slides.

The conveying device can further be provided with a motor as the first drive mechanism, having a drive shaft lying perpendicular to the conveyor track, with thereupon a chain wheel, a roller or pulley with a continuous belt or chain around it, the motor being fastened by spring elements to a mounting and containing a stop, the motor being displaceable relative to the mounting, in the direction of the conveyor track, until the stop butts against the mounting. The spring-fastening of the motor allows an axial displacement of the motor reduction gearbox, for example, which displacement is equal to the distance between two links of chain wheels gripping the drive chain. An alignment facility of this nature is important if a plurality of drive motors are used along the conveyor track and if the narrowly tolerated engagement of the chain wheels over large lengths, which can amount, for example, to three times the total length of the conveying device, cannot be achieved through synchronisation or electronic control systems.

Preferably the device is provided with a control unit which is connected to the first and the second drive mechanisms and which is set up to execute cyclically the following steps:
a activation of the second drive mechanism for placement of the lifting slides into the lift position,
b activation of the first drive mechanism for displacement of lifting slides along the conveyor tracks over a first length of displacement which is relatively small in relation to the length of the conveyor track,
c deactivation of the second drive mechanism for placement of the lifting slides into the release position,
d activation of the first drive mechanism for displacement of the lifting slides in an opposite direction to the direction of displacement in step b, over a virtually equal distance, and the control unit possibly being set up, after a number of cycles a to d,
e to activate jointly the first and the second drive mechanisms for the displacement of the lifting slides over a second length measuring at least three times the length of displacement of step b.

In the conveying system according to the prior art, the lifting slides are not operative when the load is supported on the support surface, which in this case is formed by the rotary slat conveyor. In contrast, the support surfaces according to the present invention are of stationary construction. Periodic lifting motion of the lifting slides, displacement of the lifting slides with a small stroke and the re-withdrawal to the release position allow the step-by-step displacement of differently shaped goods such as, for example, paper rolls, barrels, rolling containers, closed-bottomed pallets, open-bottomed pallets, etc. Once a complete load has been placed on the lifting slides, it can be brought into the loading space by a long stroke of the lifting slides.

With the conveying system according to the present invention, goods which are advanced with interspaces, for example over a roller conveyor, transversely to the direction of conveyance can be placed one against the other and can be loaded, in mutual contact, into a loading space. It is likewise possible to group the goods of the load one to another with predetermined interspaces and to place the grouped load in its entirety into a lorry, for example. In addition, goods which have been placed one against the other are spaced apart as they are unloaded and are transported away transversely to the direction of conveyance. With the conveying system according to the present invention, a vast amount of freedom in conveyance operations is obtained, using a reliable and simple conveying device.

The conveying system according to the invention preferably comprises at least one conveyor situated transversely to the conveyor tracks and having an end part, of predetermined width, extending between the lifting slides, the second segments lying close to the conveyor. With the aid of the short and long segments which are displaceable in mutual independence between a lift position and a release position, goods of a load which have been placed one against the other, such as pallets, for example, can be spaced apart and delivered one by one to the cross-conveyor. The short and long segments are moved jointly to and fro in the direction of conveyance.

For the loading or unloading of a loading space and for the supply or removal of a number of goods, placed one against the other, respectively to and from the cross-conveyor, the control unit according to the invention is set up to execute cyclically the following steps.
For the loading of goods into the loading space:
f placement of both segments into the release position and displacement of the segments to the conveyor,
g placement of one of the segments into the lift position and displacement of both segments from or to the conveyor until the article to be taken over or taken over from the conveyor butts against the following article on the lifting slides, and
h placement of both segments into the lift position and joint displacement from the conveyor.
For the unloading of goods from the loading space:
i placement of both segments into the lift position and displacement of the segments to the conveyor,
j placement of one of the segments into the release position and displacement of both segments from or to the conveyor until a free space has been formed between the article lying closest to the conveyor and the following article, and
k placement of both segments into the release position and joint displacement from the conveyor.

In the loading process, the short segment is used to bridge the mutual spacing of the products of the load in the direction of conveyance, before pushing the abutting load jointly along the conveyor track to inside the loading space in a single step. In the unloading process, the short segment is used to individualize the abutting load and to free the foremost goods from the products behind before transferring them to the cross-conveyor.

Finally, it is possible mutually to connect to parallel lifting slides at their end faces to a hinged connecting member for mutual stability. The connecting member can be of hollow construction and can comprise electric leads and a fluid line. In order, however, to be able to make the lifting slides reach beneath an open-bottomed pallet and to allow the supply of goods via the end face of the device, the cross-connection can be tilted downwards along a hinge point so that the end part of the lifting slides can reach between the supporting beams of a pallet or can reach beneath an object advanced along the end face.

The various aspects of the conveying system according to the present invention will hereinafter be described in detail, by way of example, with reference to the appended drawing, in which:
Figures 1a and 1b show respectively a side and top view of a conveying device according to the present invention, which is constructed as a combined unloading and loading system.
Figure 2 shows a lateral cross section along the line II-II in Figure 1b.
Figure 3 shows a cross section through an alternative conveying device in which the ends of the lifting slides are supported on the rollers of the cross-conveyor.
Figures 4 shows a partial side view of a fold-away end part of the conveying device.
Figure 5 shows a cross section through a lifting slide according to the present invention.
Figure 6 shows the removal of the cap of the U-shaped profile of the lifting slide. Figure 7 shows a lifting slide provided with alignment means.
Figure 8 shows a schematic top view of a lifting system having lifting slides with short and long segments to be placed independently into a lift position.
Figures 9a and 9b show two alternative ways of loading using a conveying device according to Figure 8.
Figures 10a and 10b show two alternative ways of unloading using a conveying device according to Figure 8.
Figure 11 shows a pneumatic plan of a conveying device, the lifting slides comprising a short and a long segment.
Figures 12a to 12c show the application of the system according to the present invention in the conveyance of roller containers, and
Figure 13 shows a partial cross sectional view of a spring-supported drive mechanism of a conveying system according to the present invention.

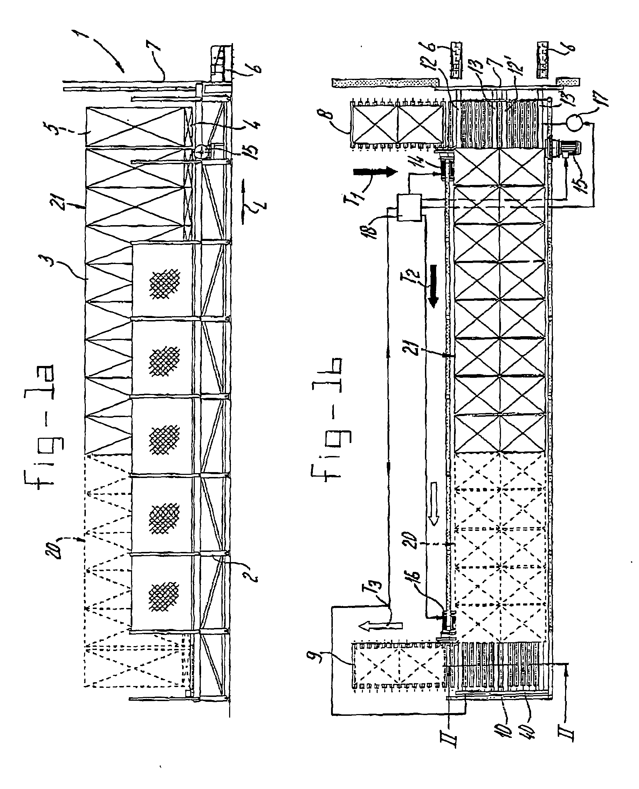

Figure 1a shows a side view of a conveying device 1 having a frame 2 over which goods 3 are displaceable in a loading and unloading direction L. The goods 3 can comprise a load carrier 4 such as, for example, a pallet or a slipsheet bearing products 5 packed in boxes or foil. The goods 3 can likewise be formed by roller containers or other load carriers which are commonly used in transportation.

On the front side 7 of the conveying device 1 there is an alignment member 6, in which a coupling piece of a semitrailer can be placed. The alignment member 6 is provided with a slope, so that a semitrailer of this type is lifted out of its springs and can be stably positioned on the front side 7 of the device.

As shown in Figure 1b, the device 1 which is herein described is provided with a pair of cross-conveyors 8, 9 in the form of drive roller conveyors which are disposed on the front side 7 and on the rear side 10 of the device. The device 1 comprises two pairs of parallel-disposed conveyor tracks 12, 13, 12', 13'. Each conveyor track 12, 13, 12', 13' comprises a U-shaped chute and one or more lifting slides which are displaceable to and fro in the chute. The vertical rims of the chute form a stationary support surface, whilst the lifting surface of the lifting slide can be displaced to above or below the support surface. The cross-conveyor 8 is driven by a motor 14 in the direction of the arrow T1. The lifting slides of the conveyor tracks 12, 13; 12', 13' are driven by a motor 15 in a direction of the arrow T2, as well as in a direction opposite thereto. The cross-conveyor 9 is driven by a motor 16 in the direction of the arrow T3. The lifting motion of the lifting slides of the conveyor tracks 12, 13, 12', 13' is driven by a drive mechanism 17, for example in the form of a compressor and a pneumatic gate. The motors 14, 15 and 16, as well as the gate of the compressor 17, are operated by a control unit 18, which determines the direction and the displacement stroke of the lifting slides of the conveyor track 12, 13, 12', 13' parallel to the direction T2, as well as the height of the lifting stroke of the lifting slides and the phase of the lifting motion relative to the longitudinal displacement.

With the device according to the present invention shown in Figures 1a and 1b, the load 20 can be unloaded from a lorry which is docked onto the front side 7 against the device 1. To this end the lifting slides of the conveyor tracks 12, 13, 12', 13' are slid in their lowest release position past the front side 7 of the device until they are extending fully into the loading space of the lorry. The lifting slides are subsequently activated by means of the compressor 17 and are withdrawn until the load 20 is at the position, represented by a dashed line, on the rear side 10 of the device. Step-by-step displacement, to and fro, of the lifting devices of the conveyor tracks 12, 13, 12', 13' allows the load 20 to be delivered row by row to the cross-conveyor 9 and to be transported away in the direction of the arrow T3. At the same time, the load 21 can be advanced by means of the cross-conveyor 8 and then placed on the device 1 and the emptied lorry 7 can subsequently be loaded with the new load 21 by placing the lifting slides of the conveyor tracks 12, 13; 12', 13' fully within the loading space of the lorry.

Although the device in Figures 1a and 1b is described with reference to a combined loading and unloading system having a pair of cross-conveyors 8, 9 it is likewise possible for the system according to the present invention to be constructed with a single cross-conveyor 8 on the front side 7 or with a single cross-conveyor 9 on the rear side 10. Furthermore, it is likewise possible according to the invention to use the device with supply conveyors present in the continuation of the conveyor tracks 12, 13, 12', 13'. The automatic loading or unloading according to the present invention results in many working hours being saved, whilst there is no need, moreover, to employ expensive tools such as forklift trucks and the like. The automatic handling of the goods serves to prevent any damage of the products. Furthermore, the waiting time for the lorries and drivers is shortened and a high throughput can be achieved, so that a factory or warehouse can work with fewer conveying devices for processing the same quantity of goods, thereby enabling savings to be made on costs and buildings.

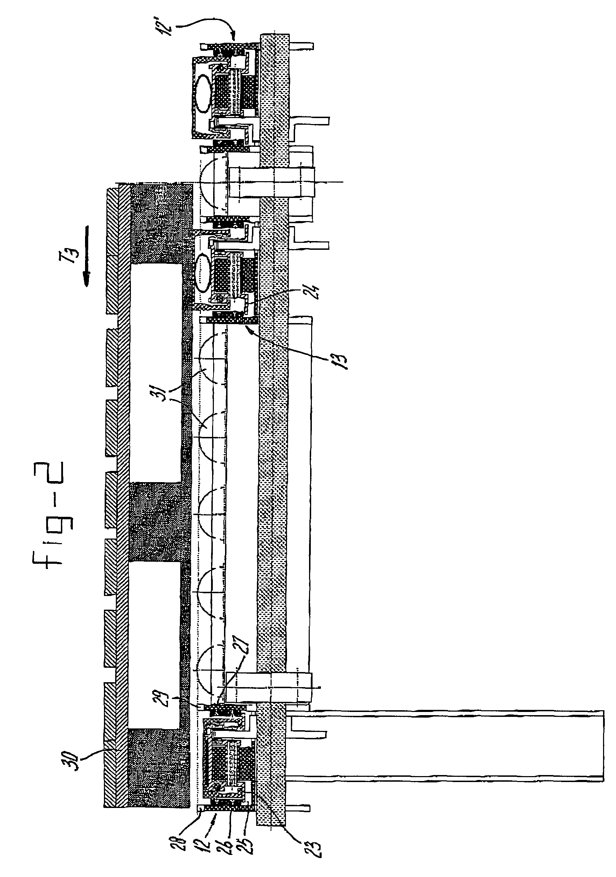

Figure 2 shows a cross sectional view, transversely to the direction of conveyance T2, of the conveyor tracks 12, 13 in Figure 1b. As is apparent from Figure 2, all conveyor tracks 12, 13 comprise a chute 25 having vertical rims 26, 27, the top surfaces 28, 29 of which form a support surface for the load, which in this case is formed by a pallet 30. The lifting slide 23 present within the chute 25 is shown in its release position situated beneath the support surfaces 28 and 29, whilst the lifting slide 24 is shown in a lift position situated above the support surfaces 28, 29. As is apparent from Figure 2, the rollers 31 of the cross-conveyor 9 extend between the conveyor tracks 12 and 13. This means that when the lifting slides 23, 24 are placed into the lift position, the pallet 30 can be lifted above the rollers 31. By bring the lifting slides 23, 24 into the release position, as is represented on the left-hand side of Figure 2, the pallets 30 are able to be supported on the rollers 31 and are transported away transversely to the direction of conveyance in the direction of the arrow T3. The arrangement of the conveyor tracks 12, 13 according to Figure 2 is suitable for the displacement of closed-bottomed objects, such as pallets.

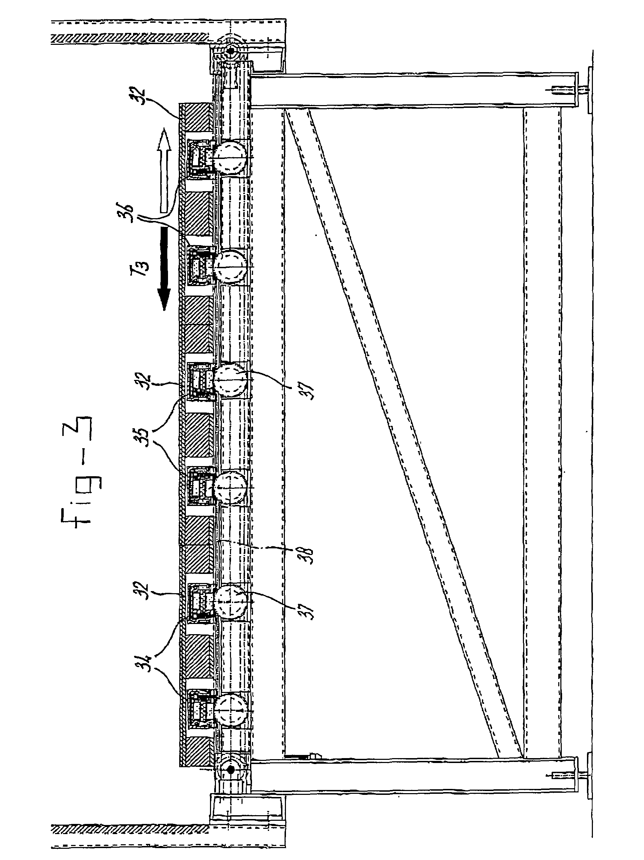

For the displacement of open-bottomed objects such as Europallets 32, for example, as shown in Figure 3, different pairs of lifting slides 34, 35 and 36 are disposed so as to fall between the chocks of the pallets 32. In view of the fact that the Europallets 32 cannot be displaced by means of the rollers 37 of the cross-conveyor, a chain 38 is provided to displace the pallets in the direction of the arrows T3. The distance between mutually opposing parts of the chain 38 is somewhat smaller than the diameter of the rollers 37. Recessed in the rollers 37 are circumferential slots, in which the chain 38 is situated.

During the displacement of the pallets in the direction of the arrow T3, the lifting slides 34, 35 and 36 are withdrawn in the direction lying out of the plane of drawings. The chutes of the conveyor tracks do not extend above the rollers 37 of the cross-conveyor. Once the pallets 32 are in a correct position, the lifting slides 34, 35 and 36 are displaced over the rollers 37, into their release position, and brought to beneath the pallets. The lifting slides are next brought into their lift position and the pallets are able to be conveyed perpendicular to the plane of drawing. A lateral displacement of the conveyor tracks and a height-adjustment of the cross-conveyor such that the lifting slides 34, 35 and 36 are situated above the rollers 37 or fall there or in-between enables the system to be used for loading and unloading both closed-bottomed articles and open-bottomed articles.

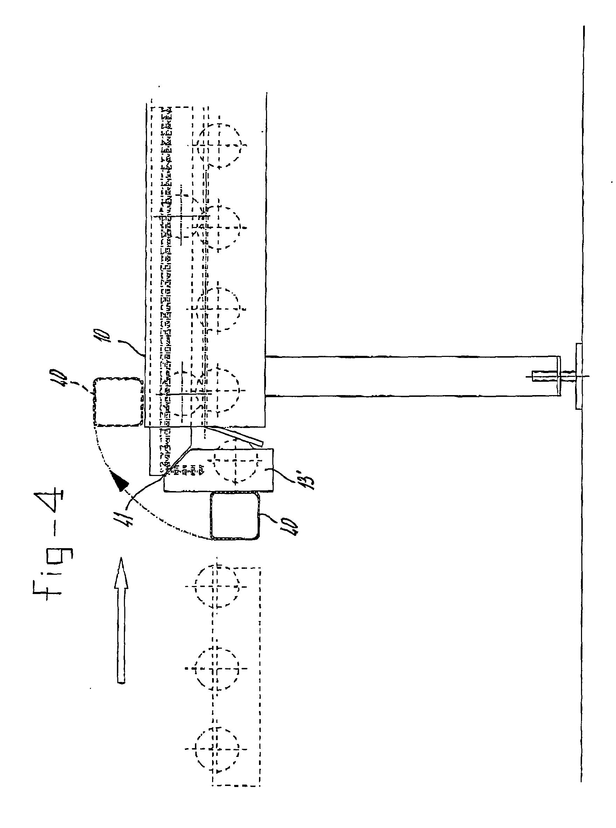

As shown in Figure 1b, the lifting slides are mutually connected on the rear side 10 by means of a connecting member 40 in order to increase the lateral stability of the lifting slides. Should the lifting slides 34, 35 and 36 need to be introduced between chocks of the pallets 32, as shown in Figure 3, the connecting member 40 has to be hinged downwards. Furthermore, the connecting member 40, comprising a sleeve, for example, allows connecting lines for power supply and pneumatics or hydraulics to be laid for each conveyor track 12, 13, 12', 13'. As shown in Figure 4, the conveyor tracks 12, 13, 12', 13' are provided on the rear side 10 with a hinge point 41 for folding away the connecting member 40. This hinged construction is also useful whenever the pallets are advanced to the topside of the device instead of transversely to the direction of conveyance as shown in Figure 1b.

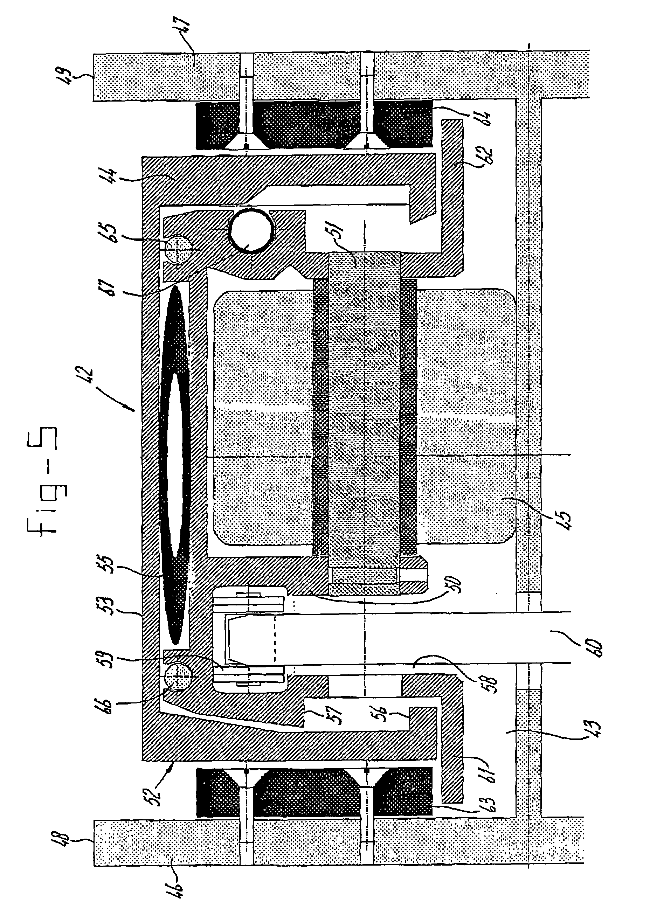

Figure 5 shows a cross section, on enlarged scale, of a conveyor track 42 according to the present invention, having a chute 43 in which a lifting slide 44 is displaceably disposed. The chute 43 is provided with a bottom which forms a running surface for the running wheel 45 of the lifting slide 44. The two vertical sidewalls 46, 47 form with their topsides 48, 49 a support surface for the stationary supporting of articles to be displaced. The lifting slide 44 comprises a U-shaped profile 50, in which the axle 51 of the running wheel 45 is mounted. Over the U-shaped profile 50 is placed a movable cap 52, topside of which forms a lifting surface 53 for engaging on the bottom side of the goods to be conveyed. Between the cap 52 and the topside 54 of the U-shaped profile 50 lies a fluid line 55, such as, for example, a 2-inch fire hose. Through the pressurization of the fluid line 55, the cap 52 is displaced with a stroke of 2.5 centimeters, for example, relative to the U-shaped profile 50. Fitted to the bottom side of the cap 52 is a stop 56, which in the maximum height position of the cap butts against a stop 57 on the outer wall of the U-shaped profile 50. The profile 50 further comprises on the left side a space 58, on the topside a chamber being formed in which a chain 59 is situated. The U-shaped profile 50 is fastened firmly to the chain 59. A chain wheel 60 reaches into the space 58 and engages on the chain 59 for displacement of the lifting slide 44.

On the bottom side, the U-shaped profile 50 is provided with two flanges 61, 62, which reach beneath cams 63, 64 on the side walls 46, 47. A stable vertical positioning of the U-shaped profile 50 in the chute 43 is thereby obtained.

Recessed in the U-shaped profile 50 are spaced for receiving/accommodating electric cables 65, 66 and for an air hose 67. Along the electric cables 65, 66 signals originating from a pressure sensor present on the front side 7 can be fed, for example, to the control unit 18. Furthermore, different segments from which the lifting slides can be constructed can be provided with compressed air by means of the air hose 67.

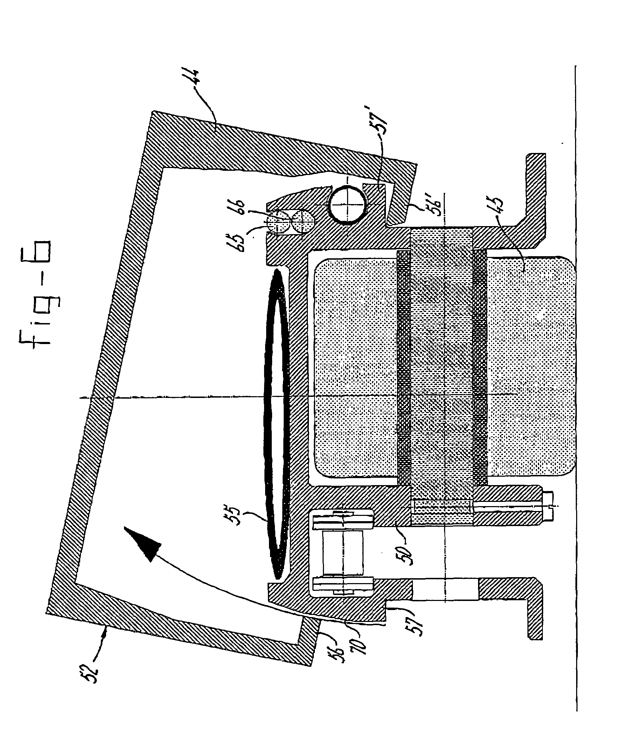

Figure 6 shows that the cap 52 of the lifting slide 44 can easily be removed by being manually tilted. To this end, the stop 57 is provided with a bevel 70 along which the stop 56 can be moved, when the cap 52 is tilted around the stop 56', once the latter butts against the stop 57' of the U-shaped profile 50. In this way, access is gained to the fluid line 55, as well as to the electric leads 65 and 66, which, in the embodiment shown in Figure 6, are somewhat different from in the embodiment according to Figure 5.

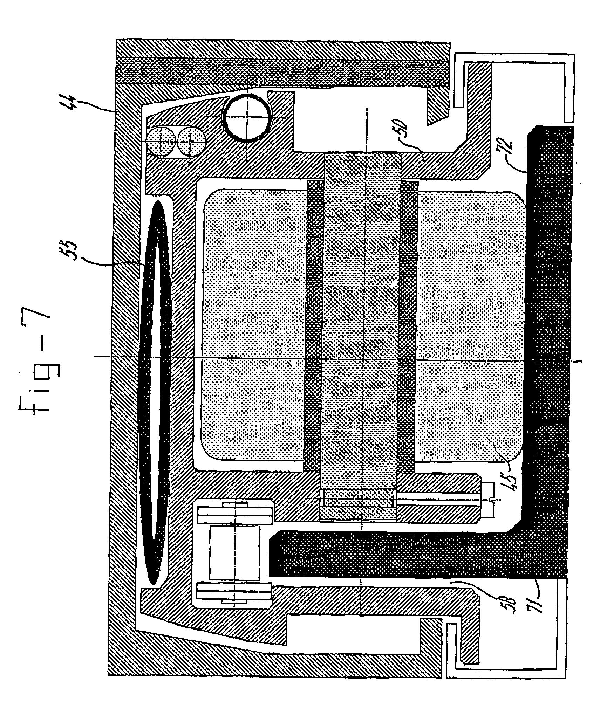

Finally, Figure 7 shows an embodiment in which the slot 58 of the U-shaped profile 50 receives a guide member 71 in the form of a right-angled profile, one arm of which serves as a running surface 72 for the running wheel 45 of the lifting slide 44. The running wheel 45 can be formed, for example, by a standard pallet roller which, by virtue of its design and small structural height, can absorb a maximum load and is also low on maintenance. The running surface of the running wheel 45 is incision-proof and has a low rolling resistance.

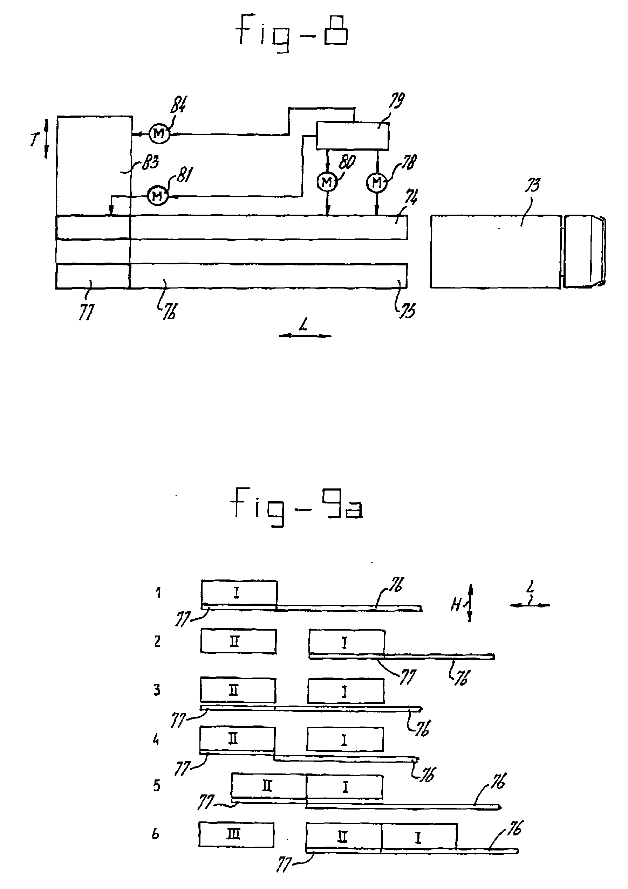

Figure 8 shows a schematic representation of a system according to the present invention for loading and unloading a lorry 73, in which the lifting slides 74 and 75 are each divided into a first segment 76 and a second segment 77. Displacement of the lifting slides of both segments 76 and 77 in the direction of conveyance L is effected simultaneously by means of a single drive motor 78, commanded by the control unit 79. Furthermore, each segment 76 and 77 is driven separately in the direction of lift H, for example by separate compressors 80, 81 or by means of a single compressor and a controlled gate. Furthermore, the cross-conveyor 83 is driven in the direction of conveyance T by means of a drive motor 84. The length of the short segments 77 essentially matches the width of the cross-conveyor 83.

Figure 9a shows a first way in which the control device 79 commands the lifting slides of the short segment 77 and of the long segment 76 in the direction of lift H and in the direction of displacement L in order to load a lorry 73. The goods are fed over the cross-conveyor 83 to the short segments 77. As is shown in step 1 of Figure 9a, both segments 77 and 76 are brought into a lift position and subsequently conveyed to the right. The product I is thereby brought to the position as shown in step 2 of Figure 9a. The stroke of the displacement is in this case somewhat greater than the length of the shorter segment 77. A new product II is aligned by the conveyor 83 with the conveyor tracks of the lifting slides 74 and 75. From position 2 in Figure 9a, both the short and the long segment 77 and 76 are brought into a release position and moved back to the left, as represented in position 3 of Figure 9a. The short segment 77 is subsequently brought into its lift position, so that the product II lifts up from the support surface. After this, the long segment 76 and the short segment 77 move jointly to the right until the product II butts against the product I. The long segment 76 is next brought into its lift position, so that the mutually abutting products I and II are conveyed jointly to the right. As shown in step 6 of Figure 9a, a new product III is next aligned with the conveyor tracks of the lifting slides 74 and 75. The step 2 to 6 of Figure 9a are subsequently repeated until the number of products on the conveyor tracks matches the length of the loading space of the lorry 73. Once this is so, all abutting products are displaced jointly to the right with one large stroke of both segments 77 and 76, so that all products are brought jointly into the loading space of the lorry 73. After this, both segments are returned to the release position and fully withdrawn, after which the process can be repeated.

Figure 9b shows an alternative way of loading a lorry 73, in which the long segment 76 and the short segment 77, in step 1, both move to the right into the lift position so that a new product II can be brought into a conveying position, as shown for position 2 of Figure 9b. Both segments 76, 77 are subsequently placed into the release position and moved to the left. After this, in step 4 of Figure 9b, the long segment 76 is brought into its lift position and both segments are subsequently moved to the left until the goods I and II butt one against the other, as shown in position 5 of Figure 9b. From this state, the short segment 77 is next brought into its lift position and the products I and II are conveyed jointly to the right as far as the starting position 6, where a new product III is placed into a conveying position. The steps 2 to 6 of Figure 9b are subsequently repeated.

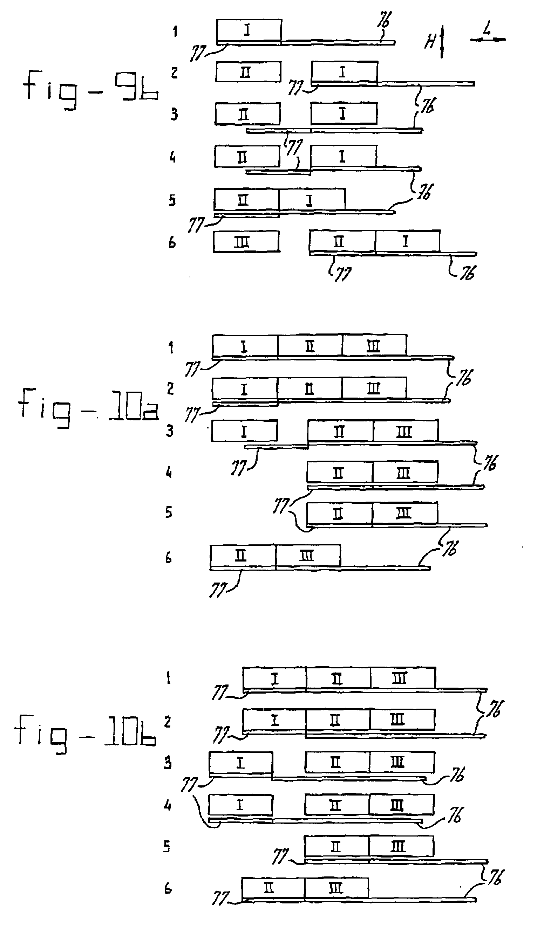

Figure 10a shows a first embodiment of a method for unloading a lorry 73 as shown in Figure 8. First of all, the goods I-III are brought out of the loading space of the lorry 73, both segments 76 and 77 being in their lift position and being displaced to the left with a relatively long stroke. As shown in step 2 of Figure 10a, the short segment 77 is next brought into the release position and both segments 76, 77 are subsequently displaced to the right, as shown in step 3. The released product I can subsequently be transported away via the cross-conveyor 83, as shown in Figure 8. The two segments 76, 77 are placed beneath the following products II, III as shown in position 4 and are subsequently placed back into a lift position as shown in position 5 of Figure 10a. After this, the segments are displaced to the left as far as the starting position as shown in step 6 of Figure 10a and steps 2 to 6 are repeated again until all products have been transported away. In the unloading procedure which has been described here, the control device 79 can drive the conveyor 83 such that this is energized at the moment of step 3 of Figure 10a. The conveyor 83 can thus be driven intermittently.

Figure 10b shows a following embodiment for unloading a loading space of a lorry 73, in which the cross-conveyor 83 can be driven continuously. In step 1, all products I-III are first removed from the loading space 73, butting one against the other, by means of a long displacement stroke of both segments 76, 77 which are in a lift position for this purpose. In step 2, the long segment 76 is next placed into its release position and, after this, both segments are brought to the left as shown in step 3. The product 1 is thereby placed above the cross-conveyor 83. The short segment 77 is next placed into it release position as shown in Figure 4, so that product I is supported on the rollers of the cross-conveyor 83 and is thereby removed. Both segments 77 and 76 subsequently withdraw into their release position to position 5 of Figure 10b. After this, they are both returned to the lift position and displaced to the left, as shown in position 6 of Figure 10b.

It will be clear to the person skilled in the art that a large number of different loading and unloading operations can be effected by the correct programming of the command unit 79. By fitting a pair of cross-conveyors as shown in the construction according to Figures 1a and 1b, as well as by having a shorter segment of the lifting slides present close to each cross-conveyor, it is thus possible, for example, to carry out a combined loading and unloading operation. It is further possible to divide the conveying device according to the invention into a plurality of segments which can all be moved independently between a release and a lift position.

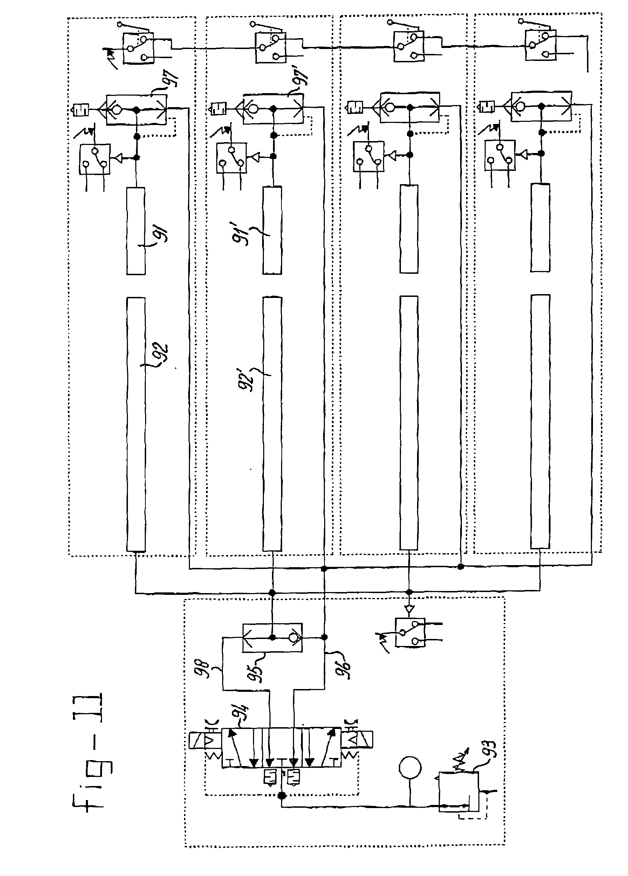

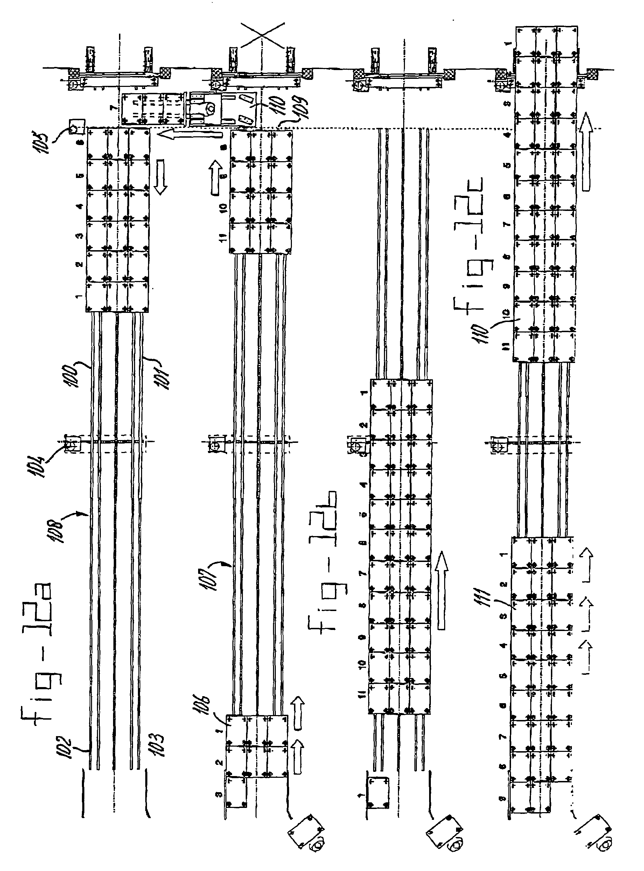

Figure 11 shows a pneumatic plan for operation of the long and short segments of a conveying device according to the invention, in which the lifting motion of the lifting slides is obtained with a short hose section 91 and a long hose section 92. Through a reducing valve 93, compressed air is fed to an electrically operated three/five gate 94. The three/five gate 94 is connected by a vent valve 95 to the long hose sections 92, 92' of each of the lifting slides situated along a conveyor track. Via a line 96, respective vent valves 97, 97' of the short sections 91, 91' are connected to the three/five gate 94. In the shown middle position of the gate 94, both the long and the short hose sections 91, 91', 92, 92' are ventilated via the respective lines 96 and 98. In the lowermost position of the gate 94, the line 96 is ventilated and the line 98 is connected to the reducing valve 93. The long hose sections 92, 92' are hereupon pressurized whilst the short hose sections 91, 91' are ventilated. In the uppermost position of the gate, the line 98 is ventilated and the line 96 is connected to the reducing valve 93, so that the short hose sections 91, 91' are pressurized and the long hose sections 92, 92' are ventilated. The position of the three/five gate 94 is in this case determined by the microcomputer in the control unit 18, 79. The operating pressures of the short and long sections 91 and 92 measure between 1 and 4 bar.

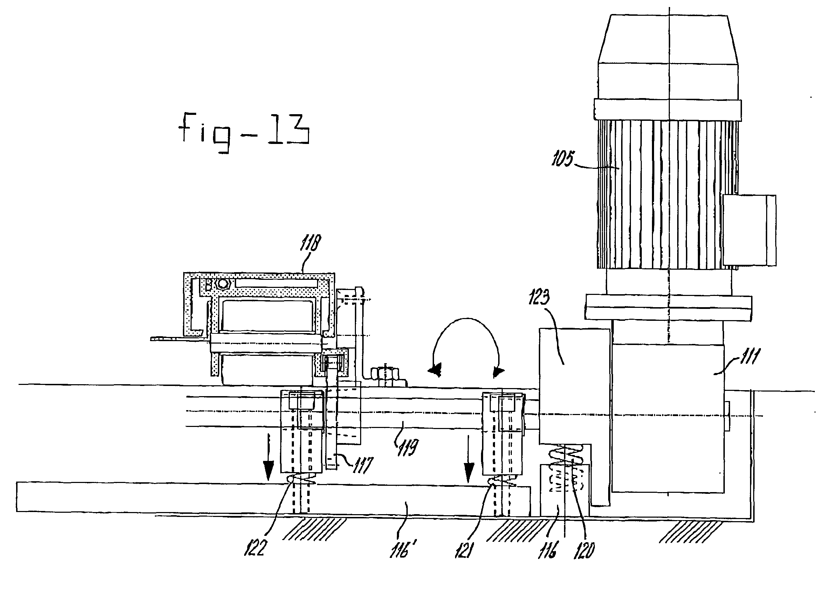

Figures 12a to 12c show a conveying device according to the present invention, in which the lifting slides 100, 101 are displaced over running surfaces 102, 103 measuring virtually twice the length of the lifting slides. To this end, two motors 104, 105 are included in order to be able to displace the lifting slides 100, 101 along the entire path.

Figure 12a shows how the system according to the present invention can be used to transfer a load 106 of a first dock 107 to a second dock 108. The load 106 can here be formed, for example, by roller containers, which, on the front side 109, are displaced transversely to the direction of conveyance using, for example, a forklift truck 110.

Figure 12b shows how the system according to the invention can be used to transfer a load to a waiting position.

Figure 12c shows how, with the system according to the invention, a first load 110 can be brought into a loading space whilst on the stationary part of the conveying device a second load 111 is being grouped pending completion of the loading.

Where a pair of drive motors 104, 105 are used, as shown in Figure 12a, the chain wheels of each motor 104, 105 need to engage precisely in the chains fastened to the lifting slides. The second drive 105 in Figure 12a has to take over driving the motor 104 once the lifting slides 100, 101 pass out of the range of the motor 104. In order to facilitate the engagement of the chain wheels on the links of the chain, the motor 105, as shown in Figure 13, is spring-fastened to a mounting 116. As is shown in Figure 13, the chain wheel 117 by which the lifting slide 118 is driven is fastened to the drive shaft 119, which is connected to the motor 105 by a reduction gearbox 111. The reduction gearbox 111 and the drive shaft 119 are connected by the spring elements 120, 121 and 122 to a respective mounting 116, 116'. The reduction gearbox 111 comprises a stop 123, which, whenever there is an angular twisting of the motor around the centre line of the drive shaft 119 equivalent to the distance between two successive links, butts against the mounting 116, after which the full drive force is applied to the shaft 119.

## Claims

1. Conveying device comprising two parallel conveyor tracks (12, 12', 13, 13') supporting member (26, 27, 46, 47) with a stationary support surface (28, 29, 48, 49) for bearing an object and a lifting slide (23, 24, 44) which is displaceable along the conveyor track, which lifting slides having a lifting surface (53) are displaceable between a release position situated beneath the support surface (28, 29, 48, 49) and a lift position situated above the support surface, as well as a first drive mechanism (15, 78, 104, 105) for displacement of the lifting slides along their respective conveyor track and a second drive mechanism (17, 80, 81) for displacement of the lifting surface between the release position and the lift position, **characterised in that** each lifting slide (23, 24, 42) comprizes at least a first and a second segment (76, 77, 91, 91', 92, 92'), the first and second segments each being provided with separate and independently operable second drive mechanisms (80, 81, 93, 94).

2. Conveying device according to claim 1, the lifting slide (44) comprising a downwardly open U-shaped profile (50) having two side walls and, suspended between them, a running wheel (45), a cap (52) embracing the U-shaped profile, and a flexible fluid line (55), lying between the cap (52) and the profile (50), for the expansion-induced mutual displacement of the cap and the profile.

3. Device according to Claim 2, **characterized in that** the profile (50) on an external surface of the side walls and the cap on an internal surface are each provided with a stop (56, 57), which stops butt against each other whenever an outermost lift position of the cap (52) is attained.

4. Device according to Claim 3, **characterized in that** the stop (57) of the U-shaped profile (50) is bevelled, so that the stop (56) of the cap (52) can be manually displaced along the stop (57) of the U-shaped profile by tilting of the cap.

5. Device according to Claim 2, 3 or 4, **characterized in that** in the profile a space is made for receiving electric leads (65, 66) and/or a fluid supply line (67) connected to the fluid line (55).

6. Device according to Claim 2, 3, 4 or 5, **characterized in that** the U-shaped profile (50) is provided on a side wall with a slot (59) lying parallel to the side wall, the profile being fastened, close to the top part of the slot, to a chain (59) running through the slot (58), and the device comprising a chain wheel (60) engaging on the chain (59) and reaching into the slot (58).

7. Device according to Claim 6, **characterized in that** guide members (71, 72) reaching into (58) the slot are fitted along the conveyor tracks (12, 12', 13, 13').

8. Device according to Claim 7, **characterized in that** the guide members (71, 72) comprise a right-angled profile, one arm (72) of which forms a running surface for the running wheel (45) of the lifting slide.

9. Device according to one of Claims 2 to 8, **characterized in that** the lifting slides (23, 24, 44) are provided at their end with a pressure sensor, connected to the control unit, for switching off the first drive mechanism (15, 78, 104, 105) whenever the control unit receives a pressure sensor signal.

10. Device according to one of Claims 2 to 9, **characterized in that** the first drive mechanism comprises a motor (105) having a drive shaft lying perpendicular to the conveyor track, with thereupon a chain wheel (117), a roller or pulley with a continuous belt or chain around it, **characterized in that** the motor is fastened by spring elements (120,121, 122) to amounting (116, 116') and contains a stop (123), the motor (115) being displaceable relative to the mounting, in the direction of the conveyor track, until the stop (123) butts against the mounting (116, 116').

11. Device according to one of Claims 2 to 10, **characterized in that** the two parallel lifting slides are mutually connected at their ends by a connecting member (40) situated transversely to the conveyor tracks, each lifting slide comprising, close to the connecting member, a hinge point (41) for tilting downwards an end part of the lifting slides, which end part is coupled with the connecting member (40).

12. Device according to one of the preceding claims, **characterized in that** the conveying device is provided with a control unit (18, 79) which is connected to the first and the second drive mechanisms and which is set up to execute cyclically the following steps:
a activation of the second drive mechanism (17, 80, 81) for placement of the lifting slides (23, 24, 44) into the lift position,
b activation of the first drive mechanism (15, 78, 104, 105) for displacement of lifting slides along the conveyor tracks (12, 12', 13, 13') over a first length of displacement which is relatively small in relation to the length of the conveyor track,
c deactivation of the second drive mechanism (17, 80, 81) for placement of the lifting slides into the release position,
d the activation of the first drive mechanism (15, 78, 104, 105) for displacement of the lifting slides in an opposite direction to the direction of displacement in step b, over a virtually equal distance, and the control unit (18, 79) possibly being set up, after a number of cycles a to d:
e to activate jointly the first and the second drive mechanisms for the displacement of the lifting slides (23, 24, 44) over a second length measuring at least three times the length of displacement of step b.

13. Device according to claim 12, **characterized in that** the relatively small length of displacement in step b matches a dimension of an object to be displaced and the second length of displacement in step e matching the dimension of a loading space to be loaded or unloaded.

14. Device according to claim 12 or 13, **characterized in that** it comprises at least one conveyor (8, 9, 83) situated transversely to the conveyor tracks(12, 12', 13, 13') and having an end part (31), of predetermined width, extending between the lifting slides (23, 24), the second segments (77, 91,91') lying close to the conveyor and, in terms of length, at least matching the width of the conveyor.

15. Device according to claim 14, **characterized in that** the control unit (18, 79) is set up to execute cyclically the following steps:
For the loading of goods into a loading space:
f. placement of both segments (76, 77, 91, 91', 92, 92') into the release position and displacement of the segments to the conveyor (8, 9, 83),
g. placement of one of the segments into the lift position and displacement of both segments from or to the conveyor until the article to be taken over or taken over from the conveyor butts against the following article on the lifting slides (23, 24, 44), and
h. placement of both segments into the lift position and joint displacement from the conveyor (8, 9, 83),
and for the unloading of goods from a loading space:
i. placement of both segments (76, 77, 91, 91', 92, 92') into the lift position and displacement of the segments to the conveyor (8, 9, 83),
j. placement of one of the segments into the release position and displacement of both segments from or to the conveyor until a free space has been formed between the article lying closest to the conveyor and the following article, and
k. placement of both segments into the release position and joint displacement from the conveyor.

## Patentansprüche

1. Fördervorrichtung mit zwei parallelen Förderbahnen (12, 12', 13, 13'), einem Tragteil (26, 27, 46, 47) mit einer ortsfesten Tragoberfläche (28, 29, 48, 49) zum Tragen eines Gegenstands, und einem Hubschlitten (23, 24, 44), der entlang der Förderbahn verlagerbar ist, wobei die Hubschlitten eine Huboberfläche (53) aufweisen und zwischen einer Freigabeposition, die sich unterhalb der Tragoberfläche (28, 29, 48, 49) befindet, und einer Hubposition, die sich oberhalb der Tragoberfläche befindet, verlagerbar sind, sowie mit einem ersten Antriebsmechanismus (15, 78, 104, 105) zum Verlagern der Hubschlitten entlang ihrer jeweiligen Förderbahn, und mit einem zweiten Antriebsmechanismus (17, 80, 81) zum Verlagern der Huboberfläche zwischen der Freigabeposition und der Hubposition, **dadurch gekennzeichnet, daß** jeder Hubschlitten (23, 24, 42) zumindest ein erstes und ein zweites Segment (76, 77, 91, 91', 92, 92') aufweist, wobei die ersten und zweiten Segmente jeweils mit getrennten und unabhängig betätigbaren zweiten Antriebsmechanismen (80, 81, 93, 94) versehen sind.

2. Fördervorrichtung nach Anspruch 1, **dadurch gekennzeichnet, daß** der Hubschlitten (44) ein nach unten offenes U-förmiges Profil (50) aufweist, welches zwei Seitenwände aufweist, und, zwischen diesen aufgehängt, ein Laufrad (45), einen Aufsatz (52), der die U-förmigen Profile übergreift, und eine flexible Fluidleitung (55), die zwischen dem Aufsatz (52) und dem Profil (50) liegt, für die durch eine Expansion eingeleitete relative Verlagerung des Aufsatzes und des Profils.

3. Vorrichtung nach Anspruch 2, **dadurch gekennzeichnet, daß** das Profil (50) auf einer äußeren Oberfläche der Seitenwände und der Aufsatz auf einer inneren Oberfläche jeweils mit einem Anschlag (56), 57) versehen sind, wobei die Anschläge gegeneinander anschlagen, wenn eine äußerste Hubposition des Aufsatzes (52) erreicht ist.

4. Vorrichtung nach Anspruch 3, **dadurch gekennzeichnet, daß** der Anschlag (57) des U-förmigen Profils (50) angeschrägt ist, so daß der Anschlag (56) des Aufsatzes (52) von Hand entlang des Anschlags (57) des U-förmigen Profils verlagert werden kann, indem der Aufsatz geneigt wird.

5. Vorrichtung nach Anspruch 2, 3 oder 4, **dadurch gekennzeichnet, daß** in dem Profil ein Zwischenraum vorgesehen ist, um elektrische Leitungen (65, 66) und/oder eine Fluidversorgungsleitung (67) aufzunehmen, die an die Fluidleitung (55) angeschlossen ist.

6. Vorrichtung nach Anspruch 2, 3, 4 oder 5, **dadurch gekennzeichnet, daß** das U-förmige Profil (50) auf einer Seitenwand angeordnet ist, wobei ein Schlitz (59) parallel zu der Seitenwand liegt, wobei das Profil nahe an dem oberen Teil des Schlitzes an einer Kette (59) befestigt ist, die durch den Schlitz (58) läuft, und wobei die Vorrichtung ein Kettenrad (60) aufweist, welches mit der Kette (59) zusammenwirkt und in den Schlitz (58) reicht.

7. Vorrichtung nach Anspruch 6, **dadurch gekennzeichnet, daß** Führungsteile (71, 72), die in (58) den Schlitz reichen, entlang der Förderbahnen (12, 12', 13, 13') angebracht sind.

8. Vorrichtung nach Anspruch 7, **dadurch gekennzeichnet, daß** die Führungsteile (71, 72) ein rechtwinkliges Profil umfassen, wobei ein Arm (72) davon eine Laufoberfläche für das Laufrad (45) des Hubschlittens bildet.

9. Vorrichtung nach einem der Ansprüche 2 bis 8, **dadurch gekennzeichnet, daß** die Hubschlitten (23, 24, 44) an ihrem Ende mit einem Drucksensor versehen sind, der mit der Steuereinheit verbunden ist, um den ersten Antriebsmechanismus (15, 78, 104, 105) auszuschalten, sobald die Steuereinheit ein Drucksensorsignal erhält.

10. Vorrichtung nach einem der Ansprüche 2 bis 9, **dadurch gekennzeichnet, daß** der erste Antriebsmechanismus einen Motor (105) umfaßt, der eine Antriebswelle aufweist, die senkrecht zu der Förderbahn liegt, wobei auf dieser ein Kettenrad (117), eine Rolle oder eine Riemenscheibe mit einem fortlaufenden Gurt oder einer Kette um dieses bzw. diese herum darauf angeordnet ist, **dadurch gekennzeichnet, daß** der Motor durch Federelemente (120, 121, 122) an einer Halterung (116, 116') befestigt ist und einen Anschlag (123) aufweist, wobei der Motor (115) relativ zu der Halterung verlagerbar ist, in der Richtung der Förderbahn, bis der Anschlag (123) gegen die Halterung (116, 116') anschlägt.

11. Vorrichtung nach einem der Ansprüche 2 bis 10, **dadurch gekennzeichnet, daß** die beiden parallelen Hubschlitten an ihren Enden durch ein Verbindungsteil (40) miteinander verbunden sind, welches quer zu den Förderbahnen angeordnet ist, wobei jeder Hubschlitten nahe an dem Verbindungsteil einen Gelenkpunkt (41) aufweist, um einen Endabschnitt der Hubschlitten nach unten zu schwenken, wobei der Endabschnitt mit dem Verbindungsteil (40) gekoppelt ist.

12. Vorrichtung nach einem der vorangehenden Ansprüche, **dadurch gekennzeichnet, daß** die Fördervorrichtung mit einer Steuereinheit (18, 79) versehen ist, die mit dem ersten und dem zweiten Antriebsmechanismus verbunden ist und die so eingerichtet ist, daß zyklisch die folgenden Schritte ausgeführt werden:
a) Aktivierung des zweiten Antriebsmechanismus (17, 80, 81) zum Plazieren der Hubschlitten (23, 24, 44) in die Hubposition,
b) Aktivierung des ersten Antriebsmechanismus (15, 78, 104, 105) zum Verlagern der Hubschlitten entlang der Förderbahnen (12, 12', 13, 13') über eine erste Verlagerungslänge, die relativ klein im Verhältnis zu der Länge der Förderbahn ist,
c) Deaktivierung des zweiten Antriebsmechanismus (17, 80, 81), um die Hubschlitten in die Freigabeposition zu plazieren,
d) Aktivierung des ersten Antriebsmechanismus (15, 78, 104, 105) zum Verlagern der Hubschlitten in einer entgegengesetzten Richtung zu der Richtung der Verlagerung in Schritt b), über eine praktisch gleiche Entfernung, wobei die Möglichkeit besteht, daß die Fördereinheit (18, 79) so eingerichtet ist, daß nach einer Anzahl von Zyklen a) bis d):
e) gemeinsam die ersten und zweiten Antriebsmechanismen aktiviert werden, um die Hubschlitten (23, 24, 44) über eine zweite Länge zu verlagern, die zumindest das Dreifache der Länge der Verlagerung des Schritts b) beträgt.

13. Vorrichtung nach Anspruch 12, **dadurch gekennzeichnet, daß** die relativ kleine Länge der Verlagerung in Schritt b) zu einer Abmessung eines zu verlagernden Gegenstands paßt, und daß die zweite Länge der Verlagerung in Schritt e) zu der Abmessung eines Ladeplatzes, der zu be- oder entladen ist, paßt.

14. Vorrichtung nach Anspruch 12 oder 13, **dadurch gekennzeichnet, daß** sie zumindest einen Förderer (8, 9, 83) aufweist, der quer zu den Förderbahnen (12, 12', 13, 13') angeordnet ist und einen Endabschnitt (31) mit vorbestimmter Breite aufweist, der sich zwischen den Hubschlitten (23, 24) erstreckt, wobei die zweiten Segmente (77, 91, 91') nahe bei dem Förderer liegen und in Bezug auf ihre Länge zumindest zu der Breite der Förderers passen.

15. Vorrichtung nach Anspruch 14, **dadurch gekennzeichnet, daß** die Steuereinheit (18, 79) so eingerichtet ist, daß sie zyklisch die folgenden Schritte ausgeführt werden:
Für die Beladung von Waren in einen Ladeplatz:
f) Plazierung der beiden Segmente (76, 77, 91, 91', 92, 92') in die Freigabeposition und Verlagerung der beiden Segmente zu dem Förderer (8, 9, 83),
g) Plazierung eines der Segmente in die Hubposition und Verlagerung der beiden Segmente von oder zu dem Förderer, bis der Gegenstand, der von dem Förderer zu übernehmen ist oder übernommen worden ist, gegen den folgenden Gegenstand auf den Hubschlitten (23, 24, 44) anstößt, und
h) Plazierung der beiden Segmente in die Hubposition und gemeinsame Verlagerung von dem Förderer (8, 9, 83),
und für das Entladen von Waren von einem Ladeplatz:
i) Plazierung der beiden Segmente (76, 77, 91, 91' 92, 92') in die Hubposition und Verlagerung der beiden Segmente zu dem Förderer (8, 9, 83),
j) Plazierung eines der Segmente in die Freigabeposition und Verlagerung der beiden Segmente von oder zu dem Förderer, bis ein freier Platz zwischen dem Gegenstand, der dem Förderer zunächstliegt, und dem folgenden Gegenstand gebildet worden ist, und
k) Plazierung der beiden Segmente in die Freigabeposition und gemeinsame Verlagerung von dem Förderer.

## Revendications

1. Dispositif de transport comprenant un élément de support (26, 27, 46, 47) de deux pistes de transport parallèles (12, 12', 13, 13') avec une surface de support immobile (28, 29, 48, 49) pour supporter un objet et un élément coulissant d'élévation (23, 24, 44) qui est déplaçable le long de la piste de transport, lesquels éléments coulissants d'élévation comportant une surface d'élévation (53) sont déplaçables entre une position de dégagement située au-dessous de la surface de support (28, 29, 48, 49) et une position d'élévation située au-dessus de la surface de support, ainsi qu'un premier mécanisme d'entraînement (15, 78, 104, 105) pour le déplacement des éléments coulissants d'élévation le long de leur piste de transport respective et un deuxième mécanisme d'entraînement (17, 80, 81) pour le déplacement de la surface d'élévation entre la position de dégagement et la position d'élévation, **caractérisé en ce que** chaque élément coulissant d'élévation (23, 24, 42) comprend au moins un premier et un deuxième segments (76, 77, 91, 91', 92, 92'), les premier et deuxième segments étant pourvus chacun de deuxièmes mécanismes d'entraînement distincts et actionnables de manière indépendante (80, 81, 93, 94).

2. Dispositif de transport selon la revendication 1, l'élément coulissant d' élévation (44) comprenant un profilé en U ouvert vers le bas (50) comportant deux parois latérales et, suspendus entre elles, une roue de roulement (45) , un capot (52) encerclant le profilé en U, et une ligne de fluide souple (55) s'étendant entre le capot (52) et le profilé (50), pour le déplacement mutuel induit par une dilatation du capot et du profilé.

3. Dispositif selon la revendication 2, **caractérisé en ce que** le profilé (50) sur une surface externe des parois latérales et le capot sur une surface interne sont pourvus chacun d'une butée (56**,** 57), lesquelles butées sont en butée l'une contre l'autre à chaque fois qu'une position d'élévation la plus externe du capot (52) est atteinte.

4. Dispositif selon la revendication 3, **caractérisé en ce que** la butée (57) du profilé en U (50) est biseautée, de sorte que la butée (56) du capot (52) puisse être déplacée manuellement le long de la butée (57) du profilé en U en inclinant le capot.

5. Dispositif selon la revendication 2, 3 ou 4, **caractérisé en ce que**, dans le profilé, un espace est réalisé pour recevoir des fils électriques (65, 66) et/ou une ligne d'alimentation en fluide (67) reliée à la ligne de fluide (55).

6. Dispositif selon la revendication 2, 3, 4 ou 5, **caractérisé en ce que** le profilé en U (50) est pourvu, sur une paroi latérale, d'une fente (59) s'étendant parallèlement la paroi latérale, le profilé étant fixe, à proximité de la partie supérieure de la fente, à une chaîne (59) s'étendant à travers la fente (58), et le dispositif comprenant une roue de chaîne (60) en prise avec la chaîne (59) et s'étendant dans la fente (58).

7. Dispositif selon la revendication 6, **caractérisé en ce que** des éléments de guidage (71, 72) s'étendant dans la fente (58) sont montés le long des pistes de transport (12, 12', 13, 13').

8. Dispositif selon la revendication 7, **caractérisé en ce que** les éléments de guidage (71 , 72) comprennent un profilé a angle droit, dont un bras (72) forme une surface de roulement pour la roue de roulement (45) de l'élément coulissant d'élévation.

9. Dispositif selon l'une des revendications 2 à 8, **caractérisé en ce que** les éléments coulissants d'élévation (23, 24, 44) sont pourvus, à leur extrémité, d'un capteur de pression, connecté à l'unité de commande, pour arrêter le premier mécanisme d'entraînement (15, 78, 104, 105) à chaque fois que l'unité de commande reçoit un signal de capteur de pression.

10. Dispositif selon l'une des revendications 2 à 9, **caractérisé en ce que** le premier mécanisme d'entraînement comprend un moteur (105) comportant un arbre d'entraînement s'étendant perpendiculairement à la piste de transport, avec sur celui-ci une roue de chaîne (117), un rouleau ou une poulie avec une courroie ou une chaîne sans fin autour de celle-ci, **caractérisé en ce que** le moteur est fixé par des éléments à ressort (120, 121, 122) à un montage (116, 116') et contient une butée (123), le moteur (115) étant déplaçable par rapport au montage, dans la direction de la piste de transport, jusqu'à ce que la butée (123) soit en butée contre le montage (116, 116').

11. Dispositif selon l'une des revendications 2 à 10, **caractérisé en ce que** les deux éléments coulissants d'élévation parallèles sont mutuellement reliés à leurs extrémités par un élément de liaison (40) situé transversalement aux pistes de transport, chaque élément coulissant d'élévation comprenant, à proximité de l'élément de liaison, un point d'articulation (41) pour incliner vers le bas une partie d'extrémité des éléments coulissants d'élévation, laquelle partie d'extrémité est accouplée à l'élément de liaison (40).

12. Dispositif selon l'une des revendications précédentes, **caractérisé en ce que** le dispositif de transport est pourvu d'une unité de commande (18, 79) qui est connectée au premier et au deuxième mécanismes d'entraînement et qui est réglée pour exécuter de manière cyclique les étapes suivantes :
a. l'activation du deuxième mécanisme d'entraînement (17, 80, 81) pour le positionnement des éléments coulissants d'élévation (23, 24, 44) dans la position d'élévation,
b. l' activation du premier mécanisme d'entraînement (15, 78, 104, 105) pour le déplacement des éléments coulissants d'élévation le long des pistes de transport (12, 12', 13, 13') sur une première longueur de déplacement qui est relativement petite par rapport à la longueur de la piste de transport,
c. la désactivation du deuxième mécanisme d'entraînement (17, 80, 81) pour le positionnement des éléments coulissants d'élévation dans la position de dégagement,
d. l'activation du premier mécanisme d'entraînement (15, 78, 104, 105) pour le déplacement des éléments coulissants d'élévation dans une direction opposée à la direction de déplacement de l'étape b, sur une distance pratiquement égale, et l'unité de commande (18, 79) étant éventuellement réglée, après un certain nombre de cycles a à d,
e. l'activation conjointement du premier et du deuxième mécanismes d'entraînement pour le déplacement des éléments coulissants d'élévation (23, 24, 44) sur une deuxième longueur correspondant au moins à trois fois la longueur de déplacement de l'étape b.

13. Dispositif selon la revendication 12, **caractérisé en ce que** la longueur relativement petite de déplacement à l'étapes b correspond à une dimension d'un objet à déplacer et la deuxième longueur de déplacement à l'étape e correspond à la dimension d'un espace de chargement devant être chargé ou déchargé.

14. Dispositif selon la revendication 12 ou 13, **caractérisé en ce qu'**il comprend au moins un dispositif de transport (8, 9, 83) situé transversalement aux pistes de transport (12, 12', 13, 13') et comportant une partie d'extrémité (31), de largeur prédéterminée, s'étendant entre les éléments coulissants d'élévation (23, 24), les deuxièmes segments (77, 91, 91') s'étendant à proximité du dispositif de transport, et en termes de longueur, correspondant au moins à la largeur du dispositif de transport.

15. Dispositif selon la revendication 14, **caractérisé en ce que** l'unité de commande (18, 79) est réglée pour exécuter de manière cyclique les étapes suivantes:
Pour le chargement de marchandises dans un espace de chargement :
f. le positionnement des deux segments (76, 77, 91, 91', 92, 92') dans la position de dégagement et le rapprochement des segments du dispositif de transport (8, 9, 83),
g. le positionnement d'un des segments dans la position d'élévation et le rapprochement ou l'éloignement des deux segments du dispositif de transport jusqu'à ce que l'article à prendre ou pris du dispositif de transport soit en butée contre l'article suivant sur les éléments coulissants d'élévation (23, 24, 44), et
h. le positionnement des deux segments dans la position d'élévation et l'éloignement conjoint du dispositif de transport (8, 9, 83),
et pour le déchargement de marchandises d'un espace de chargement :
i. le positionnement des deux segments (76, 77, 91, 91 , 92, 92') dans la position d'élévation et le rapprochement des segments du dispositif de transport (6, 9, 83),
j. le positionnement d'un des segments dans la position de dégagement et l'éloignement ou le rapprochement des deux segments du dispositif de transport jusqu'à ce qu'un espace libre ait été formé entre l'article qui est le plus proche du dispositif de transport et l'article suivant, et
k. le positionnement des deux segments dans la position de dégagement et l'éloignement conjoint du dispositif de transport.
